# EUROPÄISCHE PATENTSCHRIFT

(11) **EP 2 069 651 B1**
(45) Veröffentlichungstag und Bekanntmachung des Hinweises auf die Patenterteilung: **06.05.2015**
(21) Anmeldenummer: 07818436.3
(22) Anmeldetag: 26.09.2007
(51) Int. Cl.: F16C 33/20

(54) **GLEITLAGERVERBUNDWERKSTOFF**
COMPOSITE MATERIAL FOR A PLAIN BEARING
MATÉRIAU COMPOSITE POUR PALIER LISSE

(30) Priorität: 02.10.2006 DE 102006048311
(43) Veröffentlichungstag der Anmeldung: 17.06.2009
(73) Patentinhaber: KS Gleitlager GmbH, 68789 St. Leon-Rot (DE)
(72) Erfinder: PASTERNAK, Axel, 76669 Bad Schönbörn (DE)
(74) Vertreter: DREISS Patentanwälte PartG mbB
(86) Internationale Anmeldenummer: PCT/EP2007/008352
(87) Internationale Veröffentlichungsnummer: WO 2008/040474

(56) Entgegenhaltungen:
- EP-A- 0 939 106
- WO-A-2005/080810
- DE-A1- 19 603 353
- US-A- 3 145 101

## Beschreibung

Die Erfindung betrifft einen Gleitlagerverbundwerkstoff mit einer metallischen Stützschicht, einer darauf aufgebrachten porösen Trägerschicht und mit einem in die Poren der Trägerschicht eingebrachten Gleitschichtmaterial auf polymerer Kunststoffbasis, gegebenenfalls mit die tribologischen Eigenschaften verbessernden Füllstoffen, wobei die von PTFE verschiedene polymere Kunststoffbasis 70 - 85 Vol.-% des polymeren Gleitschichtmaterials bildet, und wobei das Gleitschichtmaterial PVDF-, PAEK-, PEEK-, PPS-, PES-, PEI-, LCP- oder PA-basiert ist.

Ein derartiger Gleitlagerverbundwerkstoff ist beispielsweise in WO-A-2005/080810 A1 der Anmelderin beschrieben, wobei ein Überstand des Gleitschichtmaterials über die porösen Trägerschicht von 10 - 30 µm genannt ist.

Der Anwendungsbereich der hier in Rede stehenden Gleitlagerverbundwerkstoffe bzw. hieraus hergestellten Gleitlagern, insbesondere Gleitlagerbuchsen, umfasst Pumpen, insbesondere Hochdruckpumpen bei hochaufladenden Dieselmotoren für Kraftfahrzeuge, aber auch sonstige Nebenaggregate von Motoren sowie Getriebeanwendungen. Der Einsatzbereich erfasst weniger Motorlager aufgrund der dort auftretenden hohen Flächenbelastungen von 60 bis 160 MPa.

Man unterscheidet bei Gleitlagerverbundwerkstoffen bzw. Gleitlagern der hier interessierenden Art grundsätzlich solche, deren Gleitschichtmaterial PTFE-basiert ist, also mehr als 50 Vol.-% PTFE umfasst, und solche, die eine von PTFE verschiedene polymere Kunststoffbasis aus einem gegenüber PTFE tragfähigeren Polymer, beispielsweise PVDF, umfassen.

Da PTFE zwar hervorragende tribologische Eigenschaften und eine hohe Temperaturstabilität aufweist, jedoch nur begrenzt belastbar ist, bildet bei der erstgenannten Gruppe von Gleitlagerverbundwerkstoffen die poröse Trägerschicht, die zumeist aus Bronze, insbesondere Kupfer-Zinn-Bronze, gebildet ist, die eigentliche Gleitschicht, während das nur geringfügig über die Trägerschicht überstehende PTFE-basierte Gleitschichtmaterial eher als Schmierstoff fungiert. Ein derartiger Gleitlagerverbundwerkstoff ist beispielsweise in EP-A-0 939 106 A1 beschrieben; dort ist ein Überstand des Gleitschichtmaterials von 0 - 50 µm genannt.

Bei der an zweiter Stelle genannten Gruppe von Gleitlagerverbundwerkstoffen bildet hingegen das von PTFE verschiedene polymere Kunststoffmaterial die Gleitschicht, die hier zugleich auch trägt. Bekannte Gleitlagerverbundwerkstoffe haben daher im Ausgangszustand für die Fertigung eines Gleitlagerelements, beispielsweise einer Gleitlagerbuchse oder einer Gleitlagerschale, einen Überstand von 50 bis 250 µm über der porösen Trägerschicht. Wie bereits erwähnt, bildet das Gleitschichtmaterial auf polymerer Kunststoffbasis die dem Gleitpartner zugewandte und den Gleitpartner tragende Gleitschicht, während die poröse Trägerschicht nur als Verankerung für die Gleitschicht dient. Diese Gruppe von Gleitlagerverbundwerkstoffen bildet den Ausgangspunkt für die vorliegende Erfindung.

Sofern die aus den Gleitlagerverbundwerkstoffen hergestellten Gleitlager in der Einbausituation vor Ort zur Erreichung höchster Genauigkeiten bestimmungsgemäß ausgespindelt werden sollen, werden sogar noch größere Überstände von 200 bis 500 µm, insbesondere 200 bis 400 µm in dem Gleitlagerverbundwerkstoff bzw. bei dem hieraus hergestellten Gleitlager vorgesehen.

Die hier in Rede stehenden Gleitlagerverbundwerkstoffe mit einer von PTFE verschiedenen polymeren Kunststoffbasis haben jedoch ihrerseits gewisse Nachteile. Sie sind beispielsweise eher thermolabil, d. h. ihre statische Lastaufnahme ist bereits bei Temperaturen unterhalb der Gebrauchstemperatur des Basispolymers eingeschränkt. Hierdurch sind nur eingeschränkte Anwendungen möglich, und motorennahe Anwendungen bei erhöhten Temperaturen sind problematisch. Ein weiteres Problem ist die schlechte Wärmeableitung bei dicken Gleitschichten mit schlecht wärmeleitenden Polymeren. Auch erweist sich die sich einstellende Spielverringerung infolge der ca. fünffach höheren Wärmeausdehnung des polymeren Kunststoffmaterials gegenüber dem metallischen Gehäuse und einer metallischen Welle oftmals als problematisch. Auch neigen polymere Kunststoffgleitschichten in Verbindung mit modernen Schmiermedien zum Quellen, was ebenfalls zu einer schwer kontrollierbaren Spielverringerung führt. Außerdem sind dicke Polymerschichten gegenüber erosiven Schädigungen, insbesondere bei mediengeschmierten Anwendungen und gleichzeitig hohen Gleitgeschwindigkeiten, problematisch.

Der vorliegenden Erfindung liegt die Aufgabe zugrunde, den Einsatzbereich von Gleitlagerverbundwerkstoffen der eingangs genannten Art zu erweitern, ohne dass die vorstehend geschilderten Probleme dies nachhaltig behindern.

Diese Aufgabe wird bei einem Gleitlagerverbundwerkstoff der genannten Art erfindungsgemäß dadurch gelöst, dass das Gleitschichtmaterial höchstens 5 Vol.-% PTFE umfasst und einen Überstand über die poröse Trägerschicht von höchstens 5 µm bildet.

Es wurde damit von einem seit Jahrzehnten praktizierten Grundsatz abgewichen, dass tragende polymere Kunststoffschichten bei Gleitlagerverbundwerkstoffen bzw. Gleitlagern der hier in Rede stehenden Art stets einen großen Überstand über der porösen Trägerschicht benötigen, da sie ja die eigentliche den Gleitpartner tragende Gleitschicht bilden. Es hat sich gezeigt, dass durch den erfindungsgemäßen Vorschlag keinesfalls eine Verringerung der Gebrauchsdauer oder gar eine Beeinträchtigung des Gleitlagerelements verbunden ist, sondern, dass sich im Gegenteil die Reduzierung der Dicke des Überstands des Gleitschichtmaterials über die poröse Trägerschicht auf den Betrieb und die möglichen Einsatzzwecke des Gleitlagers positiv auswirkt. Durch die Verringerung der Dicke des Überstands des Gleitschichtmaterials wird insbesondere eine verbesserte Wärmeableitung aus der Kontaktzone der Gleitpartner an die poröse metallische Trägerschicht erreicht, so dass Reibungswärme besser aus der Kontaktzone abgeleitet werden kann. Die in der Kontaktzone herrschenden Temperaturen können somit beträchtlich gesenkt werden, was wiederum den Einsatzbereich des Gleitlagerverbundwerkstoffs erweitert. Es kann bei motorennahen Anwendungen eingesetzt werden, wo hohe Belastungen, Temperaturen und Gleitgeschwindigkeiten auftreten.

Aufgrund des geringeren Überstands treten die vorausgehend geschilderten Probleme im Hinblick auf ein Quellen und eine Wärmeausdehnung der polymeren Kunststoffkomponenten zurück. Das Problem aggressiver Schmiermedien, wie sie gerade bei motorischen oder motorennahen Anwendungen auftreten, im Hinblick auf erosive Schädigungen, insbesondere bei hohen Gleitgeschwindigkeiten, wird damit beherrscht. Man erhält insbesondere eine verbesserte statische und dynamische Belastbarkeit bei erhöhten Temperaturen, was auf die von Anfang an wirksame Stützfunktion der porösen Trägerschicht zurückgeführt wird. Der erfindungsgemäße Gleitlagerverbundwerkstoff erlaubt auch den Einsatz kostengünstigerer Grundpolymere mit verhältnismäßig niedriger Dauergebrauchstemperatur in motorennahen Anwendungen bei deutlich erhöhten Umgebungstemperaturen. Beispielsweise kann PVDF als polymere Kunststoffbasis bei motorennahen Anwendungen und Dauergebrauchstemperaturen von über 100° C oder gar 110° C verwendet werden. Dies wird wiederum auf die unmittelbar und von Anfang an wirkende Stützfunktion der porösen Trägerschicht zurückgeführt.

Durch die an der Oberfläche wirksame bessere unmittelbare Verklammerung des polymeren Gleitschichtmaterials an der porösen Trägerschicht ist der Widerstand gegen erosive Belastungen bei mediengeschmierten Anwendungen und gleichzeitig hohen Gleitgeschwindigkeiten von mehr als 6 m/s erreicht.

Gegenüber reinen kunststofffreien Bronze-Gleitlagern (dichtgesinterte metallische Bronzegleitschicht) sind die Reibwerte des erfindungsgemäßen Gleitlagerverbundwerkstoffs deutlich überlegen; auch die Notlaufeigenschaften unter Mangelschmierung sind aufgrund der polymeren Kunststoffkomponente gegenüber rein metallischen Gleitlagern verbessert.

Der Überstand des Gleitschichtmaterials über die poröse Trägerschicht wird wie folgt ermittelt:
Es wird zunächst die Dicke des Gleitlagerverbundwerkstoffs oder eines hieraus hergestellten Gleitlagerelements unter Verwendung eines eine Messspitze aufweisenden Messtasters mit einem Ambossdurchmesser von 8 mm und einem Fußdurchmesser von 20 mm ermittelt. Danach wird die Kunststoffgleitschicht durch Abdestillieren flächenhaft von dem Gleitlagerverbundwerkstoff bzw. dem hieraus hergestellten Gleitlagerelement entfernt.
Hierzu wird die zuvor mit Gleitschicht vermessende Probe (Gleitlagerverbundwerkstoff oder flächenhafter Abschnitt eines Gleitlagerelements) in einem vorgeheizten Ofen unter Stickstoffzufuhr 20 Minuten lang bei einer Temperatur von ca. 620° ausgesetzt. Dabei verbrennt die Kunststoffgleitschicht unter Zersetzung in zum Teil giftige Gase (HF) vollständig. Anschließend verbleibt die Probe in einer Abkühlzone des Ofens weitere 20 Minuten im Ofen. Etwaige Verbrennungsrückstände werden unter fließendem Wasser mit einer Kunststoffbürste vom Sintergerüst der Trägerschicht entfernt. Sodann wird die Probe erneut und an der gleichen Stelle vermessen. Als Messmittel wird wiederum der Messtaster verwendet, gemessen wird wiederum die kleinste Gesamtdicke. Der dann rechnerisch zu ermittelnde Dickenunterschied der Gesamtdicke vor dem Abdestillieren und der Gesamtdicke nach dem Abdestillieren der Kunststoffgleitschicht stellt dann den Überstand des Gleitschichtmaterials über die poröse Trägerschicht dar.

Die auf höchstens 5 Vol.-% begrenzte polymere Kunststoffkomponente PTFE übt in dem erfindungsgemäßen Gleitlagerverbundwerkstoff keine tragende Funktion aus. Sie wirkt vielmehr als Festschmierstoff. Der erfindungsgemäße Gleitlagerverbundwerkstoff könnte auch PTFE-frei ausgebildet werden. Die von PTFE verschiedene polymere Kunststoffbasis des erfindungsgemäßen Gleitlagerverbundwerkstoffs bildet 70 bis 85 Vol.-% des polymeren Gleitschichtmaterials. Das Gleitschichtmaterial kann beispielsweise PVDF-, PAEK- (Polyaryletherketon), PEEK-, PPS-, PES-, PEI-, LCP-(liquid crystal polymer) oder PA-basiert sein; es weist solchenfalls wenigstens 50 Vol.-% der vorgenannten Polymerkomponenten einzeln oder in Summe auf. Das Gleitschichtmaterial ist zudem vorzugsweise bleifrei ausgebildet.

Das Gleitschichtmaterial kann vorzugsweise 5 bis 15 Vol.-% Zinksulfid (ZnS) oder Bariumsulfat (BaSO₄) als die tribologischen Eigenschaften verbessernde Füllstoffe umfassen. Die Verwendung von Bariumsulfat erweist sich insbesondere in sauren Medien bei pH-Werten von < 2,5 als vorteilhafter als die Verwendung von Zinksulfid.

Das Gleitschichtmaterial kann weiter vorzugsweise 70 bis 90 Vol.-% PVDF, 5 Vol.-% PTFE und 5 bis 15 Vol.-% Zinksulfid (ZnS) oder Bariumsulfat (BaSO₄) als die tribologischen Eigenschaften verbessernde Füllstoffe umfassen.

Die vorliegende Erfindung betrifft des Weiteren ein Gleitlagerelement, insbesondere eine Gleitlagerbuchse, vorzugsweise eine gerollte Gleitlagerbuchse, hergestellt aus einem erfindungsgemäßen Gleitlagerverbundwerkstoff der vorausgehend beschriebenen Art.

Die Erfindung betrifft aber auch die Verwendung eines aus einem Gleitlagerverbundwerkstoff hergestellten Gleitlagers unter Medienschmierung bei motorennahen Anwendungen, insbesondere bei Flächenbelastungen von 10 bis 50 MPa, insbesondere bei 10 bis 30 MPa, und bei Gleitgeschwindigkeiten von 2 bis 20 m/s, insbesondere bei 2 bis 15 m/s, insbesondere 5 - 15 m/s, insbesondere 5 - 10 m/s, und bei Temperaturen von 80° C bis 125°C.

In Weiterbildung des grundsätzlichen Erfindungsgedankens der Reduzierung des Überstands des Gleitschichtmaterials über die poröse Trägerschicht wird vorgeschlagen, den Überstand des Gleitschichtmaterials über die poröse Trägerschicht weiter so weit zu reduzieren, dass die poröse Trägerschicht von Beginn an einen beträchtlichen Traganteil aufweist. Es hat sich insoweit als vorteilhaft erwiesen, einen Gleitlagerverbundwerkstoff bzw. ein hieraus hergestelltes Gleitlagerelement, beispielsweise eine Gleitlagerbuchse, mit einem Anteil der porösen Trägerschicht in einer Schliffbilddarstellung der dem Gleitpartner zugewandten Gleitfläche von 20 % bis 80 % zu fertigen. Man könnte hier also davon reden, dass der Überstand des polymeren Gleitschichtmaterials quasi Null ist. Auch nach dieser Ausführungsform der Erfindung konnten aufgrund der noch unmittelbarer wirksam werdenden Tragfunktion der porösen Trägerschicht im Betrieb des Gleitlagers vorteilhafte Betriebszustände erzielt werden. Die Wärmeableitung aus der Kontaktzone ist durch den direkten Kontakt mit der metallischen porösen Trägerschicht des Gleitlagerverbundwerkstoffs weiter verbessert. Die Spielprobleme durch Quellen und Wärmeausdehnung des polymeren Kunststoffmaterials sind noch unwesentlicher als bei einem Überstand von beispielsweise 5 bis 10 µm. Durch die sofortige Stützwirkung der metallischen porösen Trägerschicht ist die statische und auch die dynamische Lastaufnahme bei erhöhten Temperaturen verbessert.

Der Gleitlagerverbundwerkstoff bzw. ein hieraus hergestelltes Gleitlager kann bestimmungsgemäß zur spanabhebenden Bearbeitung unmittelbar in der Einbausituation ausgelegt werden. Die Porosität der Bronzeschicht wird dabei insbesondere während des Verdichtens beim Einwalzen des polymeren Kunststoffmaterials so ausgelegt, dass das Gleitlagerelement bei anschließender spanabhebender Bearbeitung (z. B. Ausspindeln einer Buchse) über einen verhältnismäßig großen Tiefenbereich von ca. 30 - 100 µm einen Traganteil der porösen Trägerschicht im vorstehend genannten Bereich von 60 bis 80 % aufweist.

## Patentansprüche

1. Gleitlagerverbundwerkstoff mit einer metallischen Stützschicht, einer darauf aufgebrachten porösen Trägerschicht und mit einem in die Poren der Trägerschicht eingebrachten Gleitschichtmaterial auf polymerer Kunststoffbasis, gegebenenfalls mit die tribologischen Eigenschaften verbessernden Füllstoffen, wobei das Gleitschichtmaterial höchstens 5 Vol.-% PTFE umfasst, wobei die von PTFE verschiedene polymere Kunststoffbasis 70 - 85 Vol.-% des polymeren Gleitschichtmaterials bildet, und wobei das Gleitschichtmaterial PVDF-, PAEK-, PEEK-, PPS-, PES-, PEI-, LCP- oder PA-basiert ist, wobei das Gleitschichtmaterial einen Überstand über die poröse Trägerschicht von höchstens 5 µm bildet.

2. Gleitlagerverbundwerkstoff nach einem der vorstehenden Ansprüche, **dadurch gekennzeichnet, dass** das Gleitschichtmaterial bleifrei ausgebildet ist.

3. Gleitlagerverbundwerkstoff nach einem der vorstehenden Ansprüche, **dadurch gekennzeichnet, dass** das Gleitschichtmaterial 5 - 15 Vol.-% Zinksulfid (ZnS) oder Bariumsulfat (BaSO₄) als die tribologischen Eigenschaften verbessernde Füllstoffe umfasst.

4. Gleitlagerverbundwerkstoff nach einem der vorstehenden Ansprüche, **dadurch gekennzeichnet, dass** das Gleitschichtmaterial 70 - 90 Vol.-% PVDF, 5 -Vol.-% PTFE und 5 - 15 Vol.-% Zinksulfid (ZnS) oder Bariumsulfat (BaSO₄) als die tribologischen Eigenschaften verbessernde Füllstoffe umfasst.

5. Gleitlagerelement, insbesondere Gleitlagerbuchse, hergestellt aus einem Gleitlagerverbundwerkstoff nach einem oder mehreren der vorstehenden Ansprüche.

6. Verwendung eines aus einem Gleitlagerverbundwerkstoff nach einem oder mehreren der vorstehenden Ansprüche hergestellten Gleitlagers untet Medienschmierung bei motorennahen Anwendungen.

7. Verwendung nach Anspruch 6 bei Flächenbelastungen von 10 - 50 MPa, insbesondere bei 10 -30 Mpa.

8. Verwendung nach Anspruch 6 oder 7 bei Gleitgeschwindigkeiten von 2 - 20 m/s, insbesondere von 2 - 15 m/s, insbesondere von 5 - 15 m/s, insbesondere von 5 - 10 m/s.

9. Verwendung nach Anspruch 6, 7 oder 8 bei Temperaturen von 50°C - 125°C, insbesondere von 80°C - 125°C.

10. Verwendung nach Anspruch 6, 7, 8 oder 9 bei einer Einspritzpumpe für einen hochaufladenden Verbrennungsmotor.

## Claims

1. Friction bearing compound material with a metallic support layer, a porous carrier layer affixed onto the same, and with a friction layer material on a polymer plastic base inserted into the pores of the support layer, possibly with fillers improving the tribological characteristics, whereby the friction layer material comprises a maximum of 5 vol. % PTFE, whereby the polymer plastic base that differs from PTFE forms 70 - 85 vol. % of the polymer friction layer material, and whereby the friction layer material is based on PVDF, PAEK, PEEK, PPS, PES, PEI. LCP or PA, whereby the friction layer material forms an overhang over the porous support layer of 5 µm maximum.

2. Friction bearing compound material according to one of the preceding claims, **characterised in that** the friction layer material is of a lead-free construction.

3. Friction bearing compound material according to one of the preceding claims, **characterised in that** the friction layer material comprises 5 - 15 vol. % zinc sulphide (ZnS) or barium sulphide (BaSO₄) as the fillers improving the tribological characteristics.

4. Friction bearing compound material according to one of the preceding claims, **characterised in that** the friction layer material comprises 70 - 90 vol. % PVDF, 5 vol. % PTFE and 5 - 15 vol. % zinc sulphide (ZnS) or barium sulphide (BaSO₄) as the fillers improving the tribological characteristics.

5. Friction bearing element, in particular friction bearing bushing, produced from a friction bearing compound material according to one or more of the preceding claims.

6. Use of a friction bearing produced from a friction bearing compound material according to one or more of the preceding claims with media lubrication through engine-like applications.

7. Use according to claim 6 under area loadings of 10 - 50 MPa, in particular 10 - 30 MPa.

8. Use according to claim 6 or 7 at friction speeds of 2 - 20 m/s, in particular of 2 - 15 m/s, in particular of 5 - 15 m/s, in particular of 5 - 10 m/s.

9. Use according to claim 6, 7 or 8 at temperatures of 50°C - 125°C, in particular of 80°C to 125°C.

10. Use according to claim 6, 7, 8 or 9 with an injection pump for an energetically charged combustion engine.

## Revendications

1. Matériau composite pour palier lisse avec une couche d'appui métallique, une couche de support poreuse rapportée sur celle-ci, et avec un matériau de couche de glissement introduit dans les pores de la couche de support à base de matière plastique polymère, ayant le cas échéant des charges améliorant les propriétés tribologiques, dans lequel le matériau de couche de glissement matériau comprend au maximum 5 % en volume de PTFE, la matière plastique polymère de base constitue 70 à 85 % du matériau de couche de glissement polymère, et le matériau de couche de glissement est à base de PVDF, PAEK, PEEK, PPS, PES, PET, LCP ou PA, dans lequel le matériau de couche de glissement constitue un relief d'au plus 5 µm sur la couche de support poreuse.

2. Matériau composite pour palier lisse selon la revendication 1, **caractérisé en ce que** le matériau de couche de glissement est réalisé sans plomb.

3. Matériau composite pour palier lisse selon l'une quelconque des revendications précédentes, **caractérisé en ce que** le matériau de couche de glissement comprend 5 à 15 % en volume de sulfure de zinc (ZnS) ou de sulfate de baryum (BaSO₄) en tant que charge améliorant les propriétés tribologiques.

4. Matériau composite pour palier lisse selon l'une quelconque des revendications précédentes, **caractérisé en ce que** le matériau de couche de glissement comprend 70 à 90 % en volume de PVDF, 5 % en volume de PTFE, et 5 à 15 % en volume de sulfure de zinc (ZnS) ou de sulfate de baryum (BaSO₄) en tant que charge améliorant les propriétés tribologiques.

5. Elément de palier lisse, en particulier coussinet de palier, fabriqué en un matériau composite pour palier lisse selon l'une quelconque des revendications précédentes.

6. Utilisation d'un palier lisse fabriqué en un matériau composite pour palier lisse selon l'une quelconque des revendications précédentes, en fonctionnement à sec pour des applications liées à un moteur.

7. Utilisation selon la revendication 6, avec des charges de surface de 10 à 50 MPa, en particulier de 10 à 30 MPa.

8. Utilisation selon la revendication 6 ou 7, avec des vitesses de glissement de 2 à 20 m/s, en particulier de 2 à 15 m/s, en particulier de 5 à 10 m/s.

9. Utilisation selon la revendication 6, 7 ou 8, avec des températures de 50 à 125°C, en particulier de 80 à 125°C.

10. Utilisation selon la revendication 6, 7, 8 ou 9, par une pompe à injection destinée à un moteur à combustion interne fortement suralimenté.
